# EUROPÄISCHE PATENTSCHRIFT

(11) **EP 3 693 123 B1**
(45) Veröffentlichungstag und Bekanntmachung des Hinweises auf die Patenterteilung: **13.12.2023**
(21) Anmeldenummer: 20154808.8
(22) Anmeldetag: 31.01.2020
(51) Int. Cl.: B23K 26/242, B23K 26/26, B23K 26/30, B23K 26/32, B23K 31/02, B23K 33/00, B61D 17/04, B62D 21/02, B62D 27/02, B23K 101/00, B23K 101/24, B23K 101/28

(54) **GERIPPE-STRUKTUR MIT EINER VIELZAHL AN PROFILELEMENTEN, UND VERFAHREN ZUM HERSTELLEN EINER GERIPPE-STRUKTUR MIT EINER VIELZAHL AN PROFILELEMENTEN**
GROOVED STRUCTURE WITH A PLURALITY OF PROFILE ELEMENTS, AND METHOD OF MANUFACTURING A GROOVED STRUCTURE WITH A PLURALITY OF PROFILE ELEMENTS
STRUCTURE D'ARMATURE DOTÉE D'UNE PLURALITÉ D'ÉLÉMENTS PROFILÉS, ET MÉTHODE DE FABRICATION D'UNE STRUCTURE D'ARMATURE DOTÉE D'UNE PLURALITÉ D'ÉLÉMENTS PROFILÉS

(30) Priorität: 08.02.2019 DE 102019103182
(43) Veröffentlichungstag der Anmeldung: 12.08.2020
(73) Patentinhaber: MAN Truck & Bus SE, 80995 München (DE)
(72) Erfinder: ROHRMÜLLER, Hans, 80995 München (DE); KONDIC, Darko, 80995 München (DE); BURGER, Norbert, 80995 München (DE); SATTLER, Steve, 80995 München (DE); HINTEREDER, Jürgen, 80995 München (DE); MÖLLER, Andreas, 36145 Hofbieber (DE); KUSCH, Willi, 88239 Wangen im Allgäu (DE); SEPP, Florian, 86972 Altenstadt (DE)
(74) Vertreter: v. Bezold & Partner Patentanwälte - PartG mbB

(56) Entgegenhaltungen:
- EP-B1- 1 492 694
- DE-A1-102009 051 154
- DE-C1- 10 158 995
- GB-A- 1 559 178
- US-A- 2 387 134
- US-A- 5 716 155

## Beschreibung

Die Erfindung betrifft eine Gerippe-Struktur, nämlich Fahrzeug-Gerippe-Struktur, mit einer Vielzahl an Profilelementen, wobei zumindest ein erstes Profilelement mittels einer Verbindungskonstruktion mit zumindest einem zweiten Profilelement verbunden ist.

DE 10 158 995 C1 offenbart einen Verbindungsknoten von mindestens zwei aus Stahlblech bestehenden Profilen insbesondere einer Rahmenstruktur einer Fahrzeugkarosserie, wobei das eine Profil aus zwei parallelen Gurten und mindestens einem Verbindungssteg besteht und mit seinen gegenüberliegenden, den bzw. die Verbindungsstege überragenden Gurtenden auf das andere, zwei parallele Gurte oder Wandteile aufweisende Profil aufgesteckt ist, wobei die Gurtenden des einen Profils an den parallelen Gurten bzw. Wandteilen des anderen Profils anliegen und damit fest verbunden sind. Zum allgemeinen Stand der Technik kann auch noch auf die EP 1 492 694 B1, die US 2 387 134 A (offenbarend alle Merkmale und Schritte des Oberbegriffes der Ansprüche 1 und 19), die GB 1 559 178 A und die US 5 716 155 A verwiesen werden.

Gerippe-Strukturen mit einer Vielzahl an Profilelementen werden an z. B. Kraftfahrzeugen bereits eingesetzt, z. B. in Form Gerippe-förmiger Fahrgestelle (Chassis).

Die Profilelemente werden üblicherweise in standardisierten Produktionslinien hochrationell hergestellt und weisen über ihre Profilform ein hohes Festigkeitspotential in der Bauteilverwendung auf. Großteiles kommen hierbei Stahl- und Aluminiumprofile zum Einsatz.

Die gebräuchlichsten Verarbeitungsschritte sind Schneiden, Biegen, Fügen und Beschichten. Das Grundmaterial bestimmt in der Regel den Fügeprozess. Darin liegt die größte Komplexität im Verarbeitungsprozess. Um die höchstmögliche Wirtschaftlichkeit und Reproduzierbarkeit der Fertigungsprozesse zu gewährleisten, reduziert sich die angewandte Fügetechnologie meist auf Metallschutzgasschweißverfahren mit abschmelzender Drahtelektrode. Dabei werden z. B. 4-Kant-Hohl-Profilelemente meist stumpf aufeinander gesetzt und mittels Kehlnähte verschweißt (T-Stoß).

Nachteile hierbei sind insbesondere die hohe Wärmeeinbringung an der Fügestelle, Materialverzug aufgrund unsymmetrischen Schrumpfverhalten bei der Abkühlung der Fügestelle, reduzierte Materialfestigkeit aufgrund Einbrand- und Wurzelfehler und aufwendige Vorbehandlung vor einer eventuellen Oberflächenbeschichtung.

Eine Aufgabe der Erfindung ist es, eine alternative und/oder verbesserte Verbindungskonstruktion einer Gerippe-Struktur zu schaffen.

Diese Aufgabe kann mit den Merkmalen der unabhängigen Ansprüche 1 und 19 gelöst werden. Vorteilhafte Weiterbildungen der Erfindung sind in den Unteransprüchen offenbart.

Die Erfindung schafft eine Gerippe-Struktur, nämlich eine Fahrzeug-Gerippe-Struktur, mit einer Vielzahl an und somit insbesondere zumindest zwei Profilelementen, vorzugsweise Hohlprofilelementen, wobei zumindest ein erstes Profilelement mittels einer Verbindungskonstruktion (z. B. einer Schweißverbindung, insbesondere einer Schweißnaht), zweckmäßig mittelbar oder unmittelbar, mit zumindest einem zweiten Profilelement verbunden ist, so dass vorzugsweise das erste Profilelement und das zweite Profilelement mittels der Verbindungskonstruktion zweckmäßig mittelbar oder unmittelbar aneinander befestigt werden können.

Das Fahrzeug kann z. B. ein Kraftfahrzeug, z. B. ein Nutzfahrzeug, insbesondere ein Lastkraftwagen oder Omnibus, sein oder z. B. eine Personen-Kabine z. B. für eine Seilbahn oder einen Lastkraftwagen (zweckmäßig ein Fahrerhaus).

Die Gerippe-Struktur zeichnet sich vorzugsweise dadurch aus, dass die Verbindungskonstruktion zumindest eine Aussparung wie eine Tasche, oder ein Loch, und eine Schweißverbindung (insbesondere eine kontinuierliche oder intermittierende Schweißnaht) zumindest entlang der Aussparung aufweist.

Dadurch können vorzugsweise das erste Profilelement und das zweite Profilelement z. B. unmittelbar und/oder mittelbar z. B. über ein weiter unten erörtertes Einlegeteil aneinander befestigt werden.

Die Aussparung kann zweckmäßig im ersten Profilelement und/oder im zweiten Profilelement ausgebildet sein. Die Aussparung kann somit z. B. teilweise im ersten Profilelement und teilweise im zweiten Profilelement ausgebildet sein.

Bei einer besonderes bevorzugten Ausführungsform ist die Schweißverbindung eine Laserschweißverbindung (insbesondere eine Laserschweißnaht).

Dabei ist zu erwähnen, dass der Einsatz einer Laserschweißverbindung zwar die eingangs erörterten Nacheile eliminieren würde, aufgrund ungünstiger Fügestellengeometrie üblicherweise aber nicht möglich ist.

Die zumindest eine Aussparung im Kontext der Erfindung stellt insbesondere eine lasergerechte Fügestelle (insbesondere Fügestellengeometrie) zur Verfügung und eröffnet somit die Möglichkeit für den Einsatz einer vorteilhaften Laserschweißverbindung.

Die Fügestelle ist vorzugsweise als Stumpfstoß (insbesondere I-Stoß) zur Verfügung gestellt und ermöglicht somit insbesondere eine Stumpfstoßschweißnaht (insbesondere I-Stoß-Schweißnaht).

Es ist folglich möglich, dass die Schweißverbindung zumindest abschnittsweise entlang zumindest eines Stumpfstoßes (insbesondere I-Stoß) verläuft und/oder die Schweißverbindung zumindest abschnittsweise als Stumpfstoßschweißnaht (insbesondere I-Stoß-Schweißnaht) ausgeführt ist.

Es ist möglich, dass die Aussparung vorzugsweise aus dem ersten Profilelement und/oder dem zweiten Profilelement herausgelasert ist. Die Aussparung kann somit mittels eines Laserschneidverfahrens hergestellt werden.

Die Aussparung kann z. B. in einer oder mehreren (z. B. zumindest zwei oder zumindest drei) Seitenwänden des ersten Profilelements und/oder in einer oder mehreren (z. B. zumindest zwei oder zumindest drei) Seitenwänden des zweiten Profilelements ausgebildet sein, vorzugsweise zur Schaffung zumindest eines Stumpfstoßes (insbesondere I-Stoß), der z. B. zumindest eine Stumpfstoßschweißnaht (insbesondere I-Stoß-Schweißnaht) ermöglicht.

Es ist möglich, dass eine Stirnseite des ersten Profilelements in die vorzugsweise im zweiten Profilelement ausgebildete Aussparung eingesetzt ist und vorzugsweise die Schweißverbindung zumindest abschnittsweise das erste Profilelement und das zweiten Profilelement umfasst. Dabei kann z. B. eine Stirnseite-Seitenwand-Schweißverbindung zwischen dem ersten Profilelement und dem zweiten Profilelement realisiert werden.

Die Verbindungskonstruktion umfasst ein Einlegeteil.

Das Einlegeteil ist in die (vorzugsweise im ersten Profilelement und/oder im zweiten Profilelement ausgebildete) Aussparung eingesetzt.

Die Schweißverbindung umfasst zumindest abschnittsweise das Einlegeteil einerseits und das erste Profilelement andererseits und/oder das Einlegeteil einerseits und das zweite Profilelement andererseits.

Das Einlegeteil kann vorzugsweise eine festigkeitsoptimierte Form aufweisen.

Das Einlegeteil kann z. B. eine Anschlusseinrichtung (z. B. ein Lochbild, zumindest ein Bolzen, zumindest ein Gewinde, zumindest eine Mutter etc.) zum Anschließen eines Anbauteils und/oder zumindest eine Durchlassöffnung umfassen. Die Durchlassöffnung kann ebenfalls z. B. zum Anschließen eines Anbauteils dienen.

Die Wandstärke des Einlegeteils kann z. B. größer sein als die Wandstärke des ersten Profilelements und/oder des zweiten Profilelements. Dadurch kann das Einlegeteil z. B. als verstärkte Krafteinleitungsstelle genutzt werden.

Das Einlegeteil kann z. B. mit einem zweckmäßig seitlichen Teilabschnitt vom ersten Profilelement und/oder zweiten Profilelement abstehen.

Der Teilabschnitt kann z. B. über eine zusätzliche Schweißverbindung, vorzugsweise eine Kehlnaht-Schweißverbindung und/oder Schutzgasschweißverbindung, mit dem ersten Profilelement und/oder dem zweiten Profilelement verbunden werden.

Es ist möglich, dass das Einlegeteil einerseits und das erste Profilelement und/oder das zweite Profilelement andererseits aus unterschiedlichen Materialien hergestellt sind, so dass z. B. das Einlegeteil und das erste Profilelement und/oder das zweite Profilelement ein Hybrid-Bauteil bilden können.

Das Einlegeteil kann z. B. plattenförmig und alternativ oder ergänzend 2-dimensional oder 3-dimensional (z. B. mit einem im Wesentlichen U- oder L-förmigen Querschnitt) ausgebildet sein.

Es ist möglich, dass z. B. entlang der Verbindungskonstruktion das erste Profilelement und das zweite Profilelement mit ihren Außenflächen bündig ausgerichtet sind oder einen Offset aufweisen.

Ebenso können vorzugsweise entlang der Verbindungskonstruktion das Einlegeteil einerseits und das erste Profilelement und/oder das zweite Profilelement andererseits mit ihren Außenflächen z. B. bündig ausgerichtet sein oder einen Offset aufweisen.

Der Offset (Materialüberstand) kann insbesondere zur Schweißnahtoptimierung dienen.

Das erste Profilelement und/oder das zweite Profilelement kann z. B. als Hohlprofilelement ausgebildet sein, vorzugsweise als im Wesentlichen rechteckförmiges oder rundes Hohlprofilelement.

Das Einlegeteil kann z. B. 2-dimensional oder 3-dimensional (z. B. im Wesentlichen U- oder L-förmig) ausgebildet sein.

Es ist möglich, dass das erste Profilelement und das zweite Profilelement mittels eines T- oder Y-Stoßes zueinander ausgerichtet sind.

Das erste Profilelement und/oder das zweite Profilelement kann z. B. als Hohlprofilelement ausgebildet sein, wobei alternativ oder ergänzend das Einlegeteil plattenförmig ausgebildet sein kann.

Es ist möglich, dass die Aussparung z. B. schwalbenschwanzförmig ausgebildet ist und/oder zickzackförmig (z. B. mit im Wesentlichen rechteckförmigen, dreiecksförmigen und/oder schwalbenschwanzförmigen Taschen). Dementsprechend kann das in die Aussparung eingesetzte Gegenstück (z . B. das entsprechende Profilelement und/oder das Einlegeteil) z. B. ebenfalls schwalbenschanzförmig und/oder zickzackförmig (z. B. mit im Wesentlichen rechteckförmigen, dreiecksförmigen und/oder schwalbenschwanzförmigen Vorsprüngen) ausgebildet sein. Dadurch kann z. B. ein Formschluss in Längsrichtung des ersten Profilelements und/oder des zweiten Profilelements ermöglicht werden und/oder eine Verlängerung der Schweißverbindung ermöglicht werden.

Die Gerippe-Struktur kann z. B. ein Kraftfahrzeug-Chassis (z. B. ein Kraftfahrzeug-Fahrgestell), eine Tragstruktur einer Personen-Kabine (z. B. für einen Lastkraftwagen, insbesondere eine Sattelzugmaschine, einen Traktor oder eine Seilbahn etc.), einen Tragkorb zur Aufnahme eines oder mehrerer Kraftfahrzeug-Bauteile, und/oder eine Seitenwand-Tragstruktur eines Omnibusses (z. B. ein Seitenwand-Omnibus-Gerippe) bilden.

Die Tragstruktur der Personen-Kabine kann z. B. eine Boden-, Dach- und/oder Seitenwand-Tragstruktur der Personen-Kabine umfassen.

Die Personen-Kabine kann z. B. ein Fahrerhaus vorzugsweise eines Lastkraftwagens umfassen. Sie kann aber auch z. B. eine Personen-Kabine für eine Seilbahn sein.

Die Erfindung betrifft auch ein Kraftfahrzeug, insbesondere Nutzfahrzeug, vorzugsweise Lastkraftwagen oder Omnibus, mit zumindest einer Gerippe-Struktur wie hierin offenbart.

Die Erfindung betrifft des Weiteren ein Verfahren zum Herstellen einer Gerippe-Struktur, nämlich einer Fahrzeug-Gerippe-Struktur, mit einer Vielzahl an Profilelementen, vorzugsweise einer Gerippe-Struktur wie hierin offenbart.

Dabei wird insbesondere zumindest ein erstes Profilelement mittels einer Verbindungskonstruktion mit zumindest einem zweiten Profilelement verbunden, wobei die Verbindungskonstruktion zumindest eine Aussparung aufweist und eine Schweißverbindung entlang der Aussparung erzeugt wird.

Die hierin zur Gerippe-Struktur gemachte Offenbarung gilt auch für das Verfahren zum Herstellen der Gerippe-Struktur, so dass im Kontext der Erfindung z. B. die strukturellen Merkmale der Gerippe-Struktur ebenso als Verfahrensmerkmale offenbart gelten und/oder beansprucht werden können.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figuren 1A bis 1D: illustrieren eine Grippe-Struktur gemäß einer Ausführungsform der Erfindung,
- Figuren 2A bis 2D: illustrieren eine Grippe-Struktur gemäß einer anderen Ausführungsform der Erfindung,
- Figuren 3A bis 3D: illustrieren eine Grippe-Struktur gemäß einer wiederum anderen Ausführungsform der Erfindung,
- Figur 4: zeigt eine perspektivische Ansicht eine Grippe-Struktur gemäß einer Ausführungsform der Erfindung,
- Figur 5: zeigt eine perspektivische Ansicht eine Grippe-Struktur gemäß einer nicht erfindungsgemäßen Ausführungsform,
- Figur 6: zeigt eine schematische Darstellung einer Verbindungskonstruktion mit einer Schweißverbindung für eine Grippe-Struktur gemäß einer Ausführungsform der Erfindung.

Die in den Figuren gezeigten Ausführungsformen stimmen teilweise überein, wobei identische oder zumindest ähnliche Teile mit den gleichen Bezugszeichen versehen sind, und zu deren Erläuterung auch auf die Beschreibung der anderen Ausführungsformen verwiesen wird, um Wiederholungen zu vermeiden.

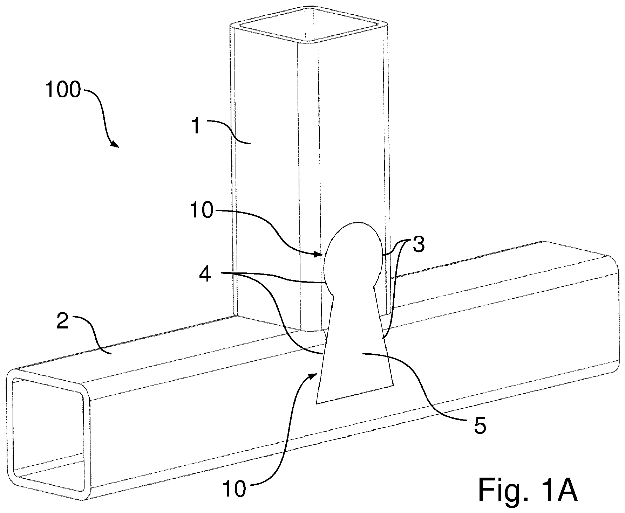

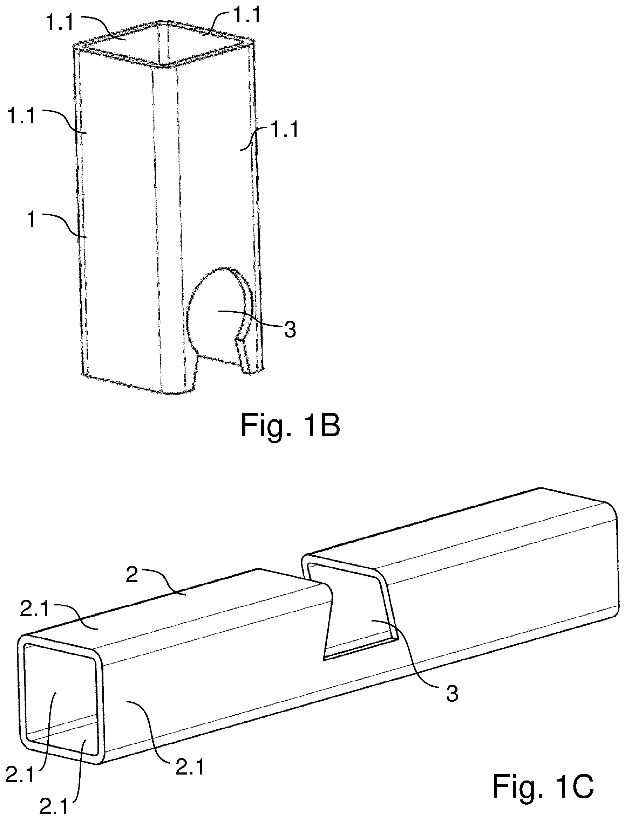

Die Figuren 1A bis 1D illustrieren eine Grippe-Struktur 100 gemäß einer Ausführungsform der Erfindung, wobei die Gerippe-Struktur 100 unter gemeinsamer Bezugnahme auf die Figuren 1A bis 1D beschrieben wird. Figur 1A zeigt eine perspektivische Ansicht der Gerippe-Struktur 100 in zusammengebautem, insbesondere zusammengeschweißten Zustand, während die Figuren 1B bis 1D Einzelelemente der Gerippe-Struktur 100 zeigen.

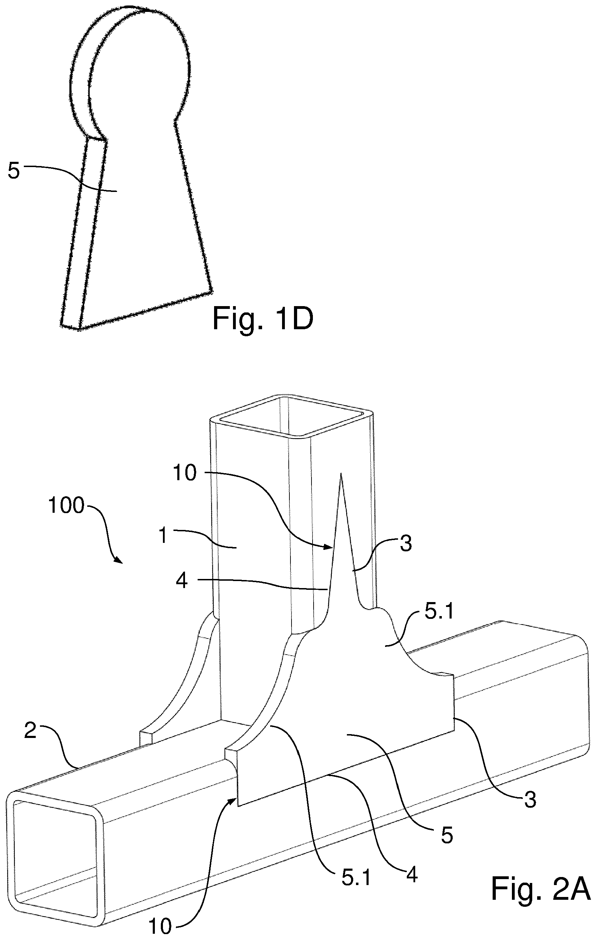

Die Gerippe-Struktur 100 umfasst eine Vielzahl an Profilelementen 1 und 2, wobei in Figur 1 lediglich ein erstes Profilelement 1 und ein zweites Profilelement 2 gezeigt sind, die beispielhaft in einem T-Stoß zueinander ausgerichtet sind, aber auch z. B. in einem Y-Stoß zueinander ausgerichtet sein können. Die Profilelemente 1 und 2 sind als rechteckförmige, insbesondere quadratische, Hohl-Profilelemente ausgebildet.

Das erste Profilelement 1 ist mittels einer Verbindungskonstruktion 10 mit dem zweiten Profilelement 2 verbunden.

Eine Besonderheit der Gerippe-Struktur 100 ist, dass die Verbindungskonstruktion 10 eine Aussparung 3, eine Einlegeteil 5 und eine Schweißverbindung 4 entlang der Aussparung 3 aufweist. Die Schweißverbindung 4 ist insbesondere als Schweißnaht ausgebildet, z. B. als eine kontinuierliche oder intermittierende Schweißnaht.

Die Aussparung 3 erstreckt sich über das erste Profilelement 1 und das zweite Profilelemente2. Das Einlegeteil 5 ist in die Aussparung 3 im ersten Profilelement 1 und im zweite Profilelement 3 eingesetzt. Die Schweißverbindung 4 erstreckt sich entlang der Aussparung 3 und entlang des Einlegeteils 5. Die Schweißverbindung 4 umfasst folglich zweckmäßig einerseits das Einlegeteil 5 und andererseits das erste Profilelement 1 sowie einerseits das Einlegeteil 5 und andererseits das zweite Profilelement 2.

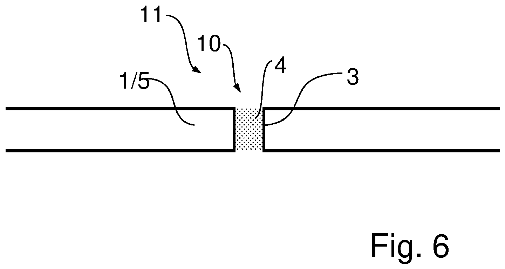

Die Aussparung 3 ermöglicht insbesondere eine Laser-Schweiß-Verbindungs-gerechte Gestaltung der Fügestelle, insbesondere einen oder mehrere Stumpfstöße (I-Stöße), wie z. B. schematisch in Figur 6 gezeigt. Dadurch wird die Möglichkeit geschaffen, die Schweißverbindung 4 vorteilhaft als Stumpfstoß-Laserschweißverbindung auszuführen.

Das erste Profilelement 1 umfasst vier Seitenwände 1.1, wobei das zweite Profilelement 2 ebenfalls vier Seitenwände 2.1 umfasst.

Die Aussprung 3 im ersten Profilelement 1 ist in nur einer Seitenwand 1.1 ausgebildet, wobei die Aussparung 3 im zweiten Profilelement 2 sich beispielhaft über drei Seitenwände 2.1 erstreckt. Die Aussparung 3 ist vorzugsweise mittels eines Laserschneidverfahrens aus dem ersten Profilelement 1 und dem zweiten Profilelement 2 herausgelasert.

Das Einlegeteil 5 kann die gleiche Wandstärke aufweisen wie das erste Profilelement 1 und das zweite Profilelement 2, aber insbesondere auch eine größere Wandstärke. Es kann aus dem gleichen Material (z. B. Metall, insbesondere Stahl) wie das erste Profilelement 1 und das zweite Profilelement 2 oder aber aus einem anderen Material hergestellt sein, so dass das Einlegeteil 5 und das erste Profilelement 1 und/oder das zweite Profilelement 2 ein Hybrides-Bauteil (z. B. Metall-Kunststoff oder Metall-Metall) bilden können.

Insbesondere entlang der Verbindungskonstruktion 10 können das Einlegeteil 5 einerseits und das erste Profilelement 1 und/oder das zweite Profilelement 2 andererseits mit ihren Außenflächen im Wesentlichen bündig ausgerichtet sein oder zur Schweißnahtoptimierung einen Offset (Materialüberstand) aufweisen.

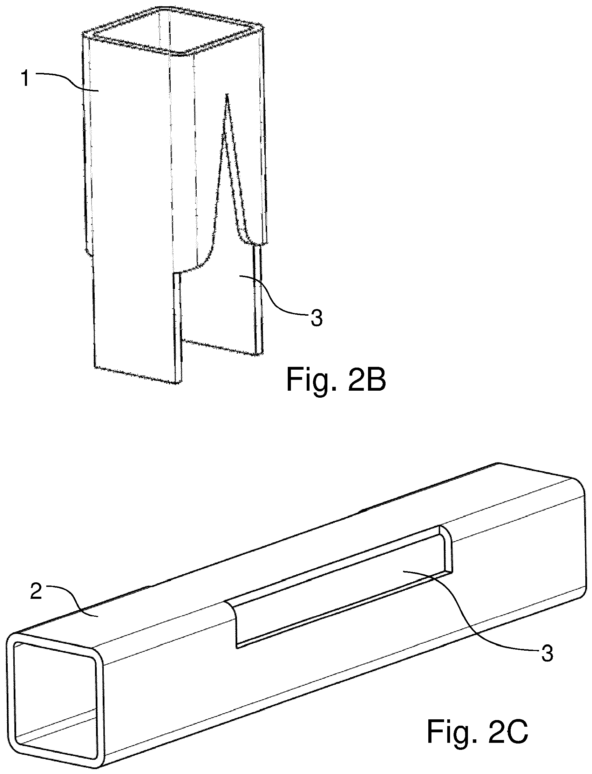

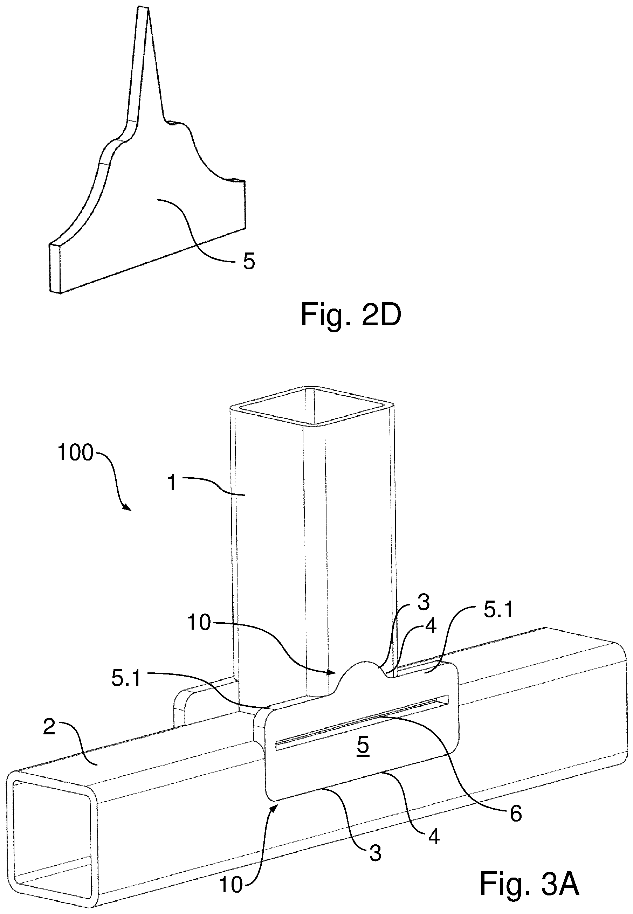

Die Figuren 2A bis 2D illustrieren eine Grippe-Struktur 100 gemäß einer anderen Ausführungsform der Erfindung.

Eine Besonderheit der in den Figuren 2A bis 2D illustrierten Grippe-Struktur 100 ist, dass das Einlegeteil 5 mit zumindest einem insbesondere seitlichen Teilabschnitt 5.1 vom ersten Profilelement 1 und zweiten Profilelement 2 absteht und der Teilabschnitt 5.1 über eine zusätzliche Schweißverbindung, vorzugsweise eine Kehlnaht-Schweißverbindung, mit dem ersten Profilelement 1 und dem zweiten Profilelement 2 verbunden werden kann.

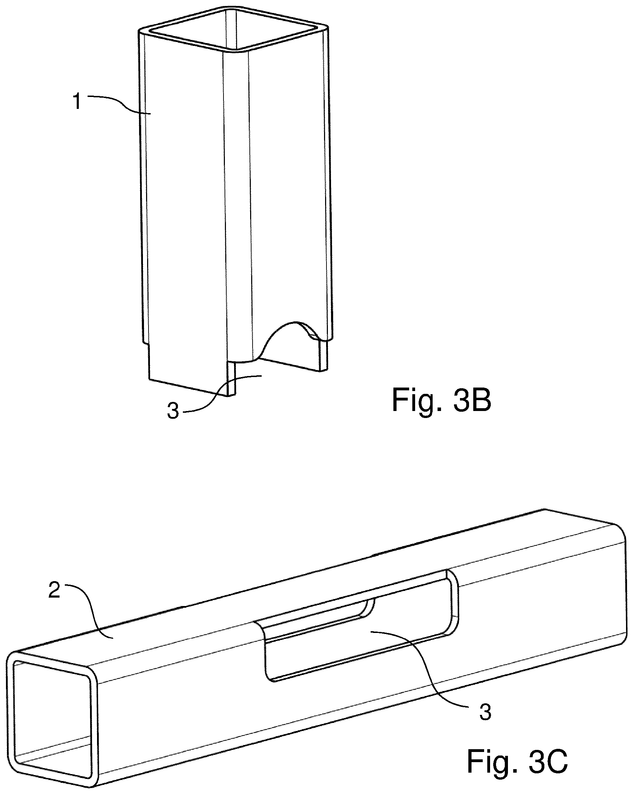

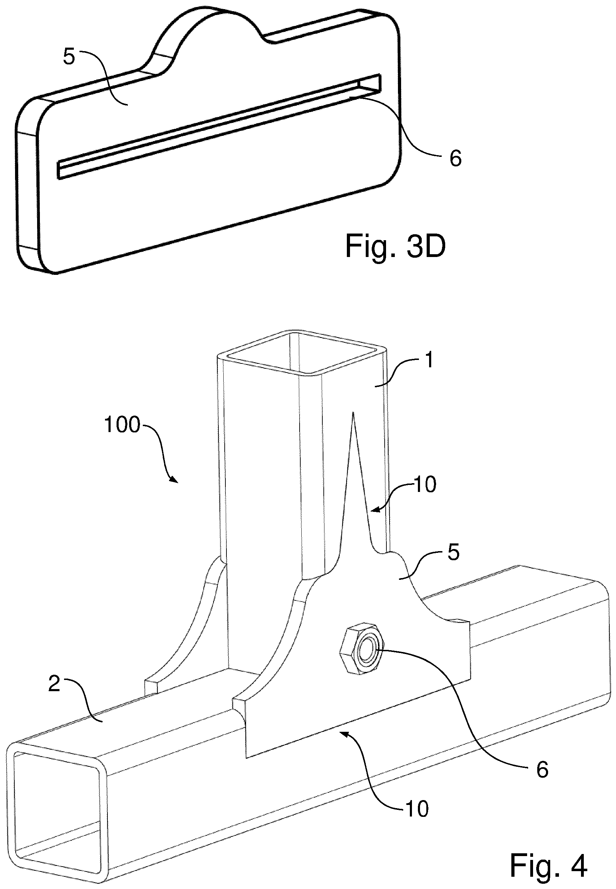

Die Figuren 3A bis 3D illustrieren eine Grippe-Struktur 100 gemäß einer anderen Ausführungsform der Erfindung, die im Prinzip der in den Figuren 2A bis 2D illustrierten Ausführungsform im Wesentlichen entspricht, wobei allerdings die Aussparung 3 und folglich das Einlegeteil 5 insbesondere eine andere Form aufweisen.

Eine Besonderheit der in den Figuren 3A bis 3D illustrierten Grippe-Struktur 100 ist allerdings, dass das Einlegeteil 5 eine Anschlusseinrichtung 6 zum Anschließen eines Anbauteils oder aber eben schlicht eine beispielhaft als Langloch ausgebildete Durchlassöffnung 6 aufweist.

Figur 4 zeigt eine perspektivische Ansicht einer Grippe-Struktur 100 gemäß einer anderen Ausführungsform der Erfindung.

Das Einlegeteilt 5 umfasst hierbei eine Anschlusseinrichtung 6 zum Anschließen eines Anbauteils, beispielhaft in Form einer Mutter.

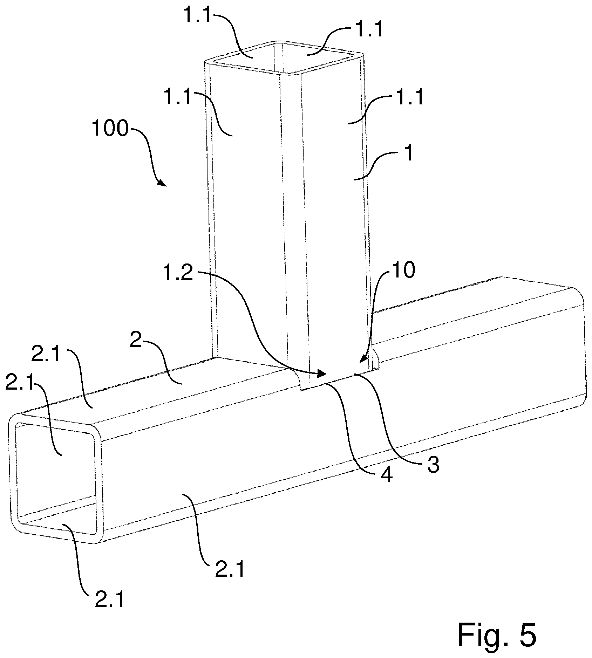

Figur 5 zeigt eine perspektivische Ansicht einer Grippe-Struktur 100 gemäß einer nicht erfindungsgemäßen Ausführungsform.

Eine Besonderheit der in Figur 5 gezeigten Ausführungsform ist, dass die Verbindungskonstruktion 10 kein Einlegeteil 5 aufweist und die Aussparung 3 lediglich im zweiten Profilelement 2 ausgebildet ist.

Eine Stirnseite 1.2 des ersten Profilelements 1 ist in die Aussparung 3 im zweiten Profilelement 2 eingesetzt, so dass die Schweißverbindung 4 das erste Profilelement 1 und das zweite Profilelement 2 zweckmäßig unmittelbar umfasst und zwar insbesondere wiederum entlang eines I-Stoßes (Stumpf-Stoßes), so dass die Schweißverbindung 4 zumindest abschnittsweise als Stumpfstoßschweißnaht (insbesondere I-Stoß-Schweißnaht) ausgeführt ist.

Figur 6 zeigt eine schematische Darstellung einer Verbindungskonstruktion 10 mit einer Schweißverbindung 4 für eine Grippe-Struktur 100 gemäß einer Ausführungsform der Erfindung.

Die Aussparung 3 ermöglicht hierbei eine lasergerechte Fügestelle (insbesondere Fügestellengeometrie) und eröffnet somit die Möglichkeit für den Einsatz einer Laserschweißverbindung.

Die Fügestelle ist als Stumpfstoß 11 (insbesondere I-Stoß) zur Verfügung gestellt und ermöglicht somit insbesondere eine Stumpfstoßschweißnaht (insbesondere I-Stoß-Schweißnaht), die sich entlang der Verbindungskonstruktion 10 und insbesondere entlang der Aussparung 3 erstrecken kann.

Die unter Bezugnahme auf die Figuren beschriebenen Verbindungskonstruktionen 10 können vorzugsweise entlang eines z. B. wie in Figur 6 schematisch gezeigten Stumpfstoßes 11 (I-Stoß) verlaufen und/oder als z. B. wie in Figur 6 schematisch gezeigte Stumpfstoßschweißnaht (I-Stoß-Schweißnaht) ausgebildet sein.

Zu erwähnen ist noch, dass die Verbindungskonstruktion 10 an einer Seitenwand zur Verfügung gestellt sein kann, aber auch an mehreren Seitenwänden.

### Bezugszeichenliste

- 1: Profilelement, insbesondere Hohlprofilelement
- 1.1: Seitenwand
- 1.2: Stirnseite
- 2: Profilelement, insbesondere Hohlprofilelement
- 2.1: Seitenwand
- 3: Aussparung
- 4: Schweißverbindung
- 5: Einlegeteil
- 6: Anschlusseinrichtung/Durchlassöffnung
- 10: Verbindungskonstruktion
- 11: Stumpfstoß, insbesondere I-Stoß
- 100: Gerippe-Struktur

## Patentansprüche

1. Gerippe-Struktur (100), nämlich Fahrzeug-Gerippe-Struktur, mit einer Vielzahl an Profilelementen (1, 2), vorzugsweise Hohlprofilelementen, wobei zumindest ein erstes Profilelement (1) mittels einer Verbindungskonstruktion (10) mit zumindest einem zweiten Profilelement (2) verbunden ist,
**dadurch gekennzeichnet, dass**
die Verbindungskonstruktion (10) zumindest eine Aussparung (3) und eine Schweißverbindung (4) entlang der Aussparung (3) aufweist, und, dass ein Einlegeteil (5) in die, vorzugsweise im ersten Profilelement (1) und im zweiten Profilelements (2) ausgebildete, Aussparung (3) eingesetzt ist und die Schweißverbindung (4) zumindest abschnittsweise das Einlegeteil (5) einerseits und das erste Profilelement (1) und/oder das zweite Profilelement (2) andererseits umfasst.

2. Gerippe-Struktur (100) nach Anspruch 1, **dadurch gekennzeichnet, dass** die Schweißverbindung (4) eine Laserschweißverbindung ist.

3. Gerippe-Struktur (100) nach Anspruch 1 oder 2, **dadurch gekennzeichnet, dass** die Schweißverbindung (4) zumindest abschnittsweise entlang eines Stumpfstoßes (11) verläuft und/oder die Schweißverbindung (4) zumindest abschnittsweise als Stumpfstoßschweißnaht ausgeführt ist.

4. Gerippe-Struktur (100) nach einem der vorhergehenden Ansprüche, **dadurch gekennzeichnet, dass** die Aussparung (3) mittels eines Laserverfahrens herausgelasert sein kann.

5. Gerippe-Struktur (100) nach einem der vorhergehenden Ansprüche, **dadurch gekennzeichnet, dass** die Aussparung (3) im ersten Profilelement (1) und/oder im zweiten Profilelements (2) ausgebildet ist.

6. Gerippe-Struktur (100) nach einem der vorhergehenden Ansprüche, **dadurch gekennzeichnet, dass** die Aussparung (3) in einer oder mehreren Seitenwänden (1.1) des ersten Profilelements (1) und/oder in einer oder mehreren Seitenwänden (2.1) des zweiten Profilelements (2) ausgebildet ist.

7. Gerippe-Struktur (100) nach einem der vorhergehenden Ansprüche, **dadurch gekennzeichnet, dass** eine Stirnseite (1.2) des ersten Profilelements (1) in die Aussparung (3) im zweiten Profilelement (2) eingesetzt ist und vorzugsweise die Schweißverbindung (4) zumindest abschnittsweise das erste Profilelement (1) und das zweiten Profilelement (2) umfasst.

8. Gerippe-Struktur (100) nach einem der vorhergehenden Ansprüche, **dadurch gekennzeichnet, dass** das Einlegeteil (5) eine Anschlusseinrichtung (6) zum Anschließen eines Anbauteils und/oder zumindest eine Durchlassöffnung (6) umfasst.

9. Gerippe-Struktur (100) nach einem der vorhergehenden Ansprüche, **dadurch gekennzeichnet, dass** die Wandstärke des Einlegeteils (5) größer ist als die Wandstärke des ersten Profilelements (1) und/oder des zweiten Profilelements (2).

10. Gerippe-Struktur (100) nach einem der vorhergehenden Ansprüche, **dadurch gekennzeichnet, dass** das Einlegeteil (5) mit einem seitlichen Teilabschnitt (5.1) vom ersten Profilelement (1) und/oder zweiten Profilelement (2) absteht und der Teilabschnitt (5.1) über eine zusätzliche Schweißverbindung, vorzugsweise eine Kehlnaht-Schweißverbindung und/oder Schutzgasschweißverbindung, mit dem ersten Profilelement (1) und/oder dem zweiten Profilelement (2) verbunden ist.

11. Gerippe-Struktur (100) nach einem der vorhergehenden Ansprüche, **dadurch gekennzeichnet, dass** das Einlegeteil (5) einerseits und das erste Profilelement (1) und/oder das zweite Profilelement (2) andererseits aus unterschiedlichen Materialien hergestellt sind.

12. Gerippe-Struktur (100) nach einem der vorhergehenden Ansprüche, **dadurch gekennzeichnet, dass** das Einlegeteil (5) 2-dimensional oder 3-dimensional ausgebildet ist.

13. Gerippe-Struktur (100) nach einem der vorhergehenden Ansprüche, **dadurch gekennzeichnet, dass** entlang der Verbindungskonstruktion (10)
- das erste Profilelement (1) und das zweite Profilelement (2) mit ihren Außenflächen bündig ausgerichtet sind oder einen Offset aufweisen, und/oder
- das Einlegeteil (5) einerseits und das erste Profilelement (1) und/oder das zweite Profilelement (2) andererseits mit ihren Außenflächen bündig ausgerichtet sind oder einen Offset aufweisen.

14. Gerippe-Struktur (100) nach einem der vorhergehenden Ansprüche, **dadurch gekennzeichnet, dass** das erste Profilelement (1) und/oder das zweite Profilelement (2) als Hohlprofilelement ausgebildet ist und/oder das Einlegeteil (5) plattenförmig ausgebildet ist.

15. Gerippe-Struktur (100) nach einem der vorhergehenden Ansprüche, **dadurch gekennzeichnet, dass** das erste Profilelement (1) und das zweite Profilelement (2) mittels eines T- oder Y-Stoßes zueinander ausgerichtet sind.

16. Gerippe-Struktur (100) nach einem der vorhergehenden Ansprüche, **dadurch gekennzeichnet, dass** die Aussparung (3) schwalbenschwanzförmig ausgebildet ist und/oder zickzackförmig ausgebildet ist.

17. Gerippe-Struktur (100) nach einem der vorhergehenden Ansprüche, **dadurch gekennzeichnet, dass** die Gerippe-Struktur (100) als Kraftfahrzeug-Chassis, als Tragstruktur einer Personen-Kabine, als Tragkorb zur Aufnahme eines Kraftfahrzeug-Bauteils, und/oder als Seitenwand-Tragstruktur eines Omnibusses ausgebildet ist.

18. Kraftfahrzeug, vorzugsweise Nutzfahrzeug, insbesondere Lastkraftwagen oder Omnibus, mit zumindest einer Gerippe-Struktur (100) nach einem der vorhergehenden Ansprüche.

19. Verfahren zum Herstellen einer Gerippe-Struktur (100), nämlich einer Fahrzeug-Gerippe-Struktur, aus einer Vielzahl an Profilelementen (1, 2), vorzugsweise einer Gerippe-Struktur (100) nach einem der Ansprüche 1 bis 17, wobei zumindest ein erstes Profilelement (1) mittels einer Verbindungskonstruktion (10) mit zumindest einem zweiten Profilelement (2) verbunden wird,
**dadurch gekennzeichnet, dass**
die Verbindungskonstruktion (10) eine Aussparung (3) aufweist und eine Schweißverbindung (4) entlang der Aussparung (3) erzeugt wird, und dass ein Einlegeteil (5) in die, vorzugsweise im ersten Profilelement (1) und im zweiten Profilelements (2) ausgebildete, Aussparung (3) eingesetzt ist und die Schweißverbindung (4) zumindest abschnittsweise das Einlegeteil (5) einerseits und das erste Profilelement (1) und/oder das zweite Profilelement (2) andererseits umfasst.

## Claims

1. Skeleton structure (100), namely vehicle skeleton structure, having a plurality of profile elements (1, 2), preferably hollow profile elements, wherein at least one first profile element (1) is connected to at least one second profile element (2) by means of a connecting structure (10),
**characterized in that**
the connecting structure (10) comprises at least one recess (3) and a welded connection (4) along the recess (3), and that an insert part (5) is inserted into the recess (3), preferably formed in the first profile element (1) and in the second profile element (2), and the welded connection (4) at least partially includes the insert part (5) on the one hand and the first profile element (1) and/or the second profile element (2) on the other hand.

2. Skeleton structure (100) according to claim 1, **characterized in that** the welded connection (4) is a laser welded connection.

3. Skeleton structure (100) according to claim 1 or 2, **characterized in that** the welded connection (4) runs at least partially along a butt joint (11) and/or the welded connection (4) is formed at least partially as a butt joint weldeld seam.

4. Skeleton structure (100) according to any one of the preceding claims, **characterized in that** the recess (3) can be lasered out by means of a laser process.

5. Skeleton structure (100) according to any one of the preceding claims, **characterized in that** the recess (3) is formed in the first profile element (1) and/or in the second profile element (2).

6. Skeleton structure (100) according to any one of the preceding claims, **characterized in that** the recess (3) is formed in one or more side walls (1.1) of the first profile element (1) and/or in one or more side walls (2.1) of the second profile element (2).

7. Skeleton structure (100) according to any one of the preceding claims, **characterized in that** a front side (1.2) of the first profile element (1) is inserted into the recess (3) in the second profile element (2) and preferably the welded connection (4) includes at least partially the first profile element (1) and the second profile element (2).

8. Skeleton structure (100) according to any one of the preceding claims, **characterized in that** the insert part (5) includes a connection device (6) for connecting an add-on part and/or at least one passage opening (6).

9. Skeleton structure (100) according to any one of the preceding claims, **characterized in that** the wall thickness of the insert part (5) is greater than the wall thickness of the first profile element (1) and/or of the second profile element (2).

10. Skeleton structure (100) according to any one of the preceding claims, **characterized in that** the insert part (5) protrudes with a lateral partial section (5.1) from the first profile element (1) and/or the second profile element (2) and the partial section (5.1) is connected to the first profile element (1) and/or the second profile element (2) via an additional welded connection, preferably a fillet welded connection and/or protective gas welded connection.

11. Skeleton structure (100) according to any one of the preceding claims, **characterized in that** the insert part (5) on the one hand and the first profile element (1) and/or the second profile element (2) on the other hand are made of different materials.

12. Skeleton structure (100) according to any one of the preceding claims, **characterized in that** the insert part (5) is formed 2-dimensional or 3-dimensional.

13. Skeleton structure (100) according to any one of the preceding claims, **characterized in that**, along the connecting structure (10)
- the first profile element (1) and the second profile element (2) are aligned flush with their outer surfaces or have an offset, and/or
- the insert part (5) on the one hand and the first profile element (1) and/or the second profile element (2) on the other hand are aligned flush with their outer surfaces or have an offset.

14. Skeleton structure (100) according to any one of the preceding claims, **characterized in that** the first profile element (1) and/or the second profile element (2) is formed as a hollow profile element and/or the insert part (5) is formed plate-shaped.

15. Skeleton structure (100) according to any one of the preceding claims, **characterized in that** the first profile element (1) and the second profile element (2) are aligned with respect to each other by means of a T- or Y-joint.

16. Skeleton structure (100) according to any one of the preceding claims, **characterized in that** the recess (3) is dovetail-shaped and/or zigzag-shaped.

17. Skeleton structure (100) according to any one of the preceding claims, **characterized in that** the skeleton structure (100) is formed as a motor vehicle chassis, as a support structure of a person cabin, as a support basket for receiving a motor vehicle component, and/or as a side wall support structure of a bus.

18. Motor vehicle, preferably commercial vehicle, in particular truck or bus, with at least one skeleton structure (100) according to any one of the preceding claims.

19. Method for producing a skeleton structure (100), namely a vehicle skeleton structure, from a plurality of profile elements (1, 2), preferably a skeleton structure (100) according to any one of claims 1 to 17, wherein at least one first profile element (1) is connected to at least one second profile element (2) by means of a connecting structure (10),
**characterized in that**
the connecting structure (10) comprises a recess (3) and a welded connection (4) is produced along the recess (3), and that an insert part (5) is inserted into the recess (3), preferably formed in the first profile element (1) and in the second profile element (2), and the welded connection (4) includes at least partially the insert part (5) on the one hand and the first profile element (1) and/or the second profile element (2) on the other hand.

## Revendications

1. Structure de châssis (100), à savoir structure de châssis de véhicule, comprenant un grand nombre d'éléments profilés (1, 2), de préférence des éléments profilés creux, au moins un premier élément profilé (1) étant relié à au moins un deuxième élément profilé (2) au moyen d'une construction de liaison (10), **caractérisé en ce que**
la construction de liaison (10) comporte au moins un évidement (3) et une liaison soudée (4) le long de l'évidement (3), et
une pièce d'insertion (5) est insérée dans l'évidement (3), ménagé de préférence dans le premier élément profilé (1) et dans le deuxième élément profilé (2), et la liaison soudée (4) comprend au moins par portions la pièce d'insertion (5) d'une part et le premier élément profilé (1) et/ou le deuxième élément profilé (2) d'autre part.

2. Structure de châssis (100) selon la revendication 1, **caractérisée en ce que** la liaison soudée (4) est une liaison soudée au laser.

3. Structure de châssis (100) selon la revendication 1 ou 2, **caractérisée en ce que** la liaison soudée (4) s'étend au moins par portions le long d'un joint abouté (11) et/ou la liaison soudée (4) est conçue au moins par portions comme une soudure de joint abouté.

4. Structure de châssis (100) selon l'une des revendications précédentes, **caractérisée en ce que** l'évidement (3) peut être usiné au laser par un procédé laser.

5. Structure de châssis (100) selon l'une des revendications précédentes, **caractérisée en ce que** l'évidement (3) est ménagé dans le premier élément profilé (1) et/ou dans le deuxième élément profilé (2).

6. Structure de châssis (100) selon l'une des revendications précédentes, **caractérisée en ce que** l'évidement (3) est ménagé dans une ou plusieurs parois latérales (1.1) du premier élément profilé (1) et/ou dans une ou plusieurs parois latérales (2.1) du deuxième élément profilé (2).

7. Structure de châssis (100) selon l'une des revendications précédentes, **caractérisée en ce qu'**une face frontale (1.2) du premier élément profilé (1) est insérée dans l'évidement (3) du deuxième élément profilé (2) et de préférence la liaison soudée (4) comprend au moins par portions le premier élément profilé (1) et le deuxième élément profilé (2).

8. Structure de châssis (100) selon l'une des revendications précédentes, **caractérisée en ce que** la pièce d'insertion (5) comprend un dispositif de raccordement (6) destiné à raccorder une pièce rapportée et/ou au moins une ouverture de passage (6).

9. Structure de châssis (100) selon l'une des revendications précédentes, **caractérisée en ce que** l'épaisseur de paroi de la pièce d'insertion (5) est supérieure à l'épaisseur de paroi du premier élément profilé (1) et/ou du deuxième élément profilé (2).

10. Structure de châssis (100) selon l'une des revendications précédentes, **caractérisée en ce que** la pièce d'insertion (5) fait saillie, avec une portion latérale (5.1), du premier élément profilé (1) et/ou du deuxième élément profilé (2) et la portion (5.1) est reliée au premier élément profilé (1) et/ou au deuxième élément profilé (2) par le biais d'une liaison soudée supplémentaire, de préférence une liaison soudée d'angle et/ou une liaison soudée sous gaz protecteur.

11. Structure de châssis (100) selon l'une des revendications précédentes, **caractérisée en ce que** la pièce d'insertion (5) d'une part et le premier élément profilé (1) et/ou le deuxième élément profilé (2) d'autre part sont réalisés à partir de différents matériaux.

12. Structure de châssis (100) selon l'une des revendications précédentes, **caractérisée en ce que** la pièce d'insertion (5) est conçue en 2 dimensions ou en 3 dimensions.

13. Structure de châssis (100) selon l'une des revendications précédentes, **caractérisée en ce que** le long de la construction de liaison (10)
- le premier élément profilé (1) et le deuxième élément profilé (2) sont alignés à fleur de leurs surfaces extérieures ou présentent un décalage et/ou
- la pièce d'insertion (5) d'une part et le premier élément profilé (1) et/ou le deuxième élément profilé (2) d'autre part sont alignés avec leurs surfaces extérieures ou présentent un décalage.

14. Structure de châssis (100) selon l'une des revendications précédentes, **caractérisée en ce que** le premier élément profilé (1) et/ou le deuxième élément profilé (2) sont conçus comme éléments profilés creux et/ou la pièce d'insertion (5) est conçue en forme de plaque.

15. Structure de châssis (100) selon l'une des revendications précédentes, **caractérisée en ce que** le premier élément profilé (1) et le deuxième élément profilé (2) sont orientés l'un par rapport à l'autre au moyen d'un aboutement en T ou en Y.

16. Structure de châssis (100) selon l'une des revendications précédentes, **caractérisée en ce que** l'évidement (3) est conçue en forme de queue d'aronde et/ou est en forme de zigzag.

17. Structure de châssis (100) selon l'une des revendications précédentes, **caractérisée en ce que** la structure de châssis (100) est conçue comme un châssis de véhicule automobile, une structure porteuse d'un habitacle, un panier porteur destiné à recevoir un composant de véhicule automobile, et/ou une structure porteuse à parois latérales d'un bus.

18. Véhicule automobile, de préférence véhicule utilitaire, notamment camion ou bus, compenant au moins une structure de châssis (100) selon l'une des revendications précédentes.

19. Procédé de fabrication d'une structure de châssis (100), à savoir une structure de châssis de véhicule, à partir d'un grand nombre d'éléments profilés (1, 2), de préférence une structure de châssis (100) selon l'une des revendications 1 à 17, au moins un premier élément profilé (1) étant relié à au moins un deuxième élément profilé (2) au moyen d'une construction de liaison (10),
**caractérisé en ce que**
la construction de liaison (10) comporte au moins un évidement (3) et une liaison soudée (4) est générée le long de l'évidement (3), et
une pièce d'insertion (5) est insérée dans l'évidement (3), ménagé de préférence dans le premier élément profilé (1) et dans le deuxième élément profilé (2), et la liaison soudée (4) comprend au moins par portions la pièce d'insertion (5) d'une part et le premier élément profilé (1) et/ou le deuxième élément profilé (2) d'autre part.
